# EUROPEAN PATENT SPECIFICATION

(11) **EP 2 789 559 B1**
(45) Date of publication and mention of the grant of the patent: **27.07.2016**
(21) Application number: 13388003.9
(22) Date of filing: 08.04.2013
(51) Int. Cl.: B65H 45/28, B65G 57/00

(54) **Sheet dispenser**
Blattspender
Distributeur de feuilles

(43) Date of publication of application: 15.10.2014
(73) Proprietor: Pal-Cut A/S, 7500 Holstebro (DK)
(72) Inventor: Pedersen, Rudi, Borbjerg 7500 Holstebro (DK)
(74) Representative: Budde Schou A/S

(56) References cited:
- EP-A1- 1 580 134
- EP-A1- 1 612 164
- WO-A1-00/71448
- WO-A1-99/01345
- WO-A1-2004/031058
- US-A- 4 941 374
- US-A1- 2010 089 006

## Description

The present invention relates to a sheet dispenser for dispensing intermediate sheet layers for use between layers of stackable packages on a pallet, said sheet dispenser comprising a sheet feeder and a cutting device.

When stacking packages on pallets, it is normal procedure to place intermediate sheets between the layers of packages. The intermediate sheets are made from cardboard or paper and preferably have applied thereto an antiskid coating, as the intermediate sheets serve to make the stacked packages on the pallet more stable.

The intermediate sheet layers may be placed on the layer of packages by means of a robot arm with suction means, or alternatively the intermediate sheet layer may be placed manually on the stacked packages.

The individual intermediate sheet layers are dispensed from a sheet dispenser, where the sheet is rolled up on a roll from which it is feed to the sheet feeder. When entering the sheet feeder, it is cut to suitable length for placing on a pallet stack. Such dispensers are e.g. disclosed in WO99/01345, WO 00/71448, EP 1 580 134, US 2010/089006, EP 1 612 164, US 4941374 and WO 2004/031058 A1.

When stacking packages on pallets, it may be desirable to provide some sort of information which should be visible on the stacked pallet. The information may be about the packages, or it may an advertising or logo for the contents in the packages on the pallet. Hitherto, such information has been provided on the stacked pallets as one or more pieces of papers that are taped to the stack on the pallet.

It is clear that the procedure described above for taping pieces of papers with information on the stacked pallets is difficult to carry out in a systematic and reliable manner, and, thus, the procedure is uncertain and cumbersome.

An object of the present invention is to provide a simple and reliable way of providing a pallet stacked with packages with a text message or other information.

Thus, the present invention relates to a sheet dispenser for dispensing intermediate sheet layers for use between layers of stackable packages on a pallet, said sheet dispenser comprising a sheet feeder and a cutting device to cut the sheet in desired lengths in the direction of feeding, wherein the sheet dispenser comprises a folding mechanism adapted to provide at least one folded part in the sheet on the sheet feeder.

The sheet dispenser receives the sheet material from a roll of paper or cardboard, which is normally replaceable, and which is mounted on the sheet dispenser below the sheet feeder. The sheet is guided from the roll to the sheet feeder by means of rotating cylinders. The cylinders may be placed in a housing in which housing the cutting device may also be mounted. The cutting device is a well-known type of cutting device that may cut the sheet in a direction substantially perpendicular to the direction of feeding. The distance between a cut and the subsequent cut determines the length of the sheet on the sheet feeder.

The width of the sheet will normally be the standard width determined by the sheet roll, i.e. the width of the roll.

Moreover, the sheet dispenser according to the invention also comprises a folding mechanism capable of folding the sheet on the sheet feeder. As a result of the folding the sheet has at least one folded part, which folded part may be seen as a portion of the sheet that has an inclination different from the inclination of the remaining part of the sheet. Thus, the part of the sheet which is referred to as the remaining part, may form an intermediate sheet layer between layers of stacked packages on a pallet. Preferably the sheet layer comprises an anti-skid coating that will serve to stabilize the stacked packages. The folded part may be placed so as to be visible on the finally stacked pallet. The folded part may comprise a text message readable for persons viewing the stacked pallet.

By systematically folding the intermediate sheet layer and placing the folded part so as to be visible on the stacked pallet, a reliable procedure of providing a text message or other information on a stacked pallet is established, which text message or information is clearly visible.

According to an embodiment, the folding mechanism is adapted for providing two folded parts in the sheet on the sheet feeder. The two folded parts are preferably provided at opposite ends of the sheet in the direction of feeding, and the intermediate sheet layer is capable of providing information on two sides of a stacked pallet, i.e. by means of the two folded parts.

Consequently, the folding mechanism is adapted to provide at least one and preferably two folds in the sheet on the sheet feeder. The folds are substantially perpendicular to the direction of feeding. Thus, when the sheet is placed between two layers of packages on a pallet in such a way that a portion of the sheet functions as an intermediate layer, the folds will substantially correspond to edges formed by the stacked packages, and the folded parts will be visible on the exterior of the stacked pallet.

For the purpose of keeping the folded parts visible when the sheet functions as an intermediate layer, it is preferred that the folded part or parts have an extension allowing the folded part or parts to extend beyond the pallet face size, when the sheet is placed as an intermediate layer between layers of stacked packages on a pallet. Thus, the portion of the sheet which has not been folded has a size corresponding to the face size of the pallet, and when the sheet serves as an intermediate layer on a stacked pallet, the folded parts will remain visible.

In some embodiments it may be desirable to adjust or have a variation of the length of the individual sheets for the purpose of varying the size of the folded part. Consequently, the cutting device may be adjusted to cut off the sheet to a desired length. The adjustment means may include a sensor registering the feed rate of the sheet, or optionally an optical sensor sensing marks on the fed sheet material.

It is desirable to have the information on the folded parts visible on at least two sides of the stacked pallet and preferably on two opposing sides of the stacked pallet. Thus, the invention relates to embodiments in which the folding mechanism is adapted to provide two folded parts on the sheet. The two folded parts are preferably provided at each end of the sheet, i.e. the ends defined by the direction of feeding.

In an embodiment, the folding mechanism comprises electric or hydraulic actuators to activate the folding motion. Electric or hydraulic actuators are able to control the folding motion very precisely.

Although it is possible to base the folding mechanism on the principles of buckle folding, it is, however, preferred that the folding mechanism functions as a knife folder, i.e. a folder providing rather sharp folds in the sheet material.

The sheet dispenser according to the invention may also comprise a printer adapted to print on the folded part or parts of the sheet. The printer may print a text comprising information about the stacked pallet, or the printer may print an advertisement or a logo.

Moreover, the invention provides an embodiment of the sheet dispenser where the folded part or parts have applied thereto a printed text, a logo, an advertisement, a hologram or the like. The text, logo, etc. may be pre-printed on the sheet material, or it may be printed on the sheet during production of the intermediate sheet layer in the sheet dispenser, as described above.

The present invention also relates to a method of providing a sheet part for a text message, logo or the like on a stacked pallet. The method may comprise the steps of:
optionally providing a sheet to a sheet dispenser;
optionally placing the sheet on the sheet feeder of the sheet dispenser;
optionally cutting the sheet to a desired length;
folding at least one part of the sheet to obtain a folded part; moving the folded sheet to a pallet with stacked packages; and placing the sheet in such a way that the unfolded part of the sheet will become an intermediate sheet layer between layers of packages on the pallet, and the at least one folded part will extend so as to be visible on one side of the stacked pallet, wherein the folded part comprises a text message, logo or the like.

According to the method, a sheet, which preferably comprises an antiskid coating, is folded and serves as an intermediate sheet layer between stacked packages on a pallet in such a way that the unfolded part is placed between two layers of stacked packages and the folded part extends out from the stack and is visible on a side of the stacked pallet.

It is preferred that the sheet is folded to obtain two folded parts. Such an embodiment allows the two folded parts of the sheet to be visible on two sides of the stacked pallet.

Thus, the method also comprises an embodiment in which two folded parts at opposite ends of the sheet and visible on two opposing sides on the stacked pallet.

The invention will now be described in further detail with reference to drawings, in which:
- Fig. 1: shows a sheet dispenser according to the invention;
- Fig. 2: illustrates the folding mechanism, showing the sheet entering the sheet feeder;
- Fig. 3: illustrates the folding mechanism, showing the sheet during folding;
- Fig. 4: illustrates the folding mechanism, showing the sheet after folding;
- Fig. 5: shows a stacked pallet with intermediate sheets according to the invention;
- Fig. 6: shows a stacked pallet with intermediate sheets according to the invention;
- Fig. 7: shows a folded sheet;
- Fig. 8: shows a sheet material for use according to the invention; and
- Fig. 9: shows a sheet dispenser according to the invention using the sheet material shown in fig. 8.

In the figures the same reference numbers are used for the same parts.

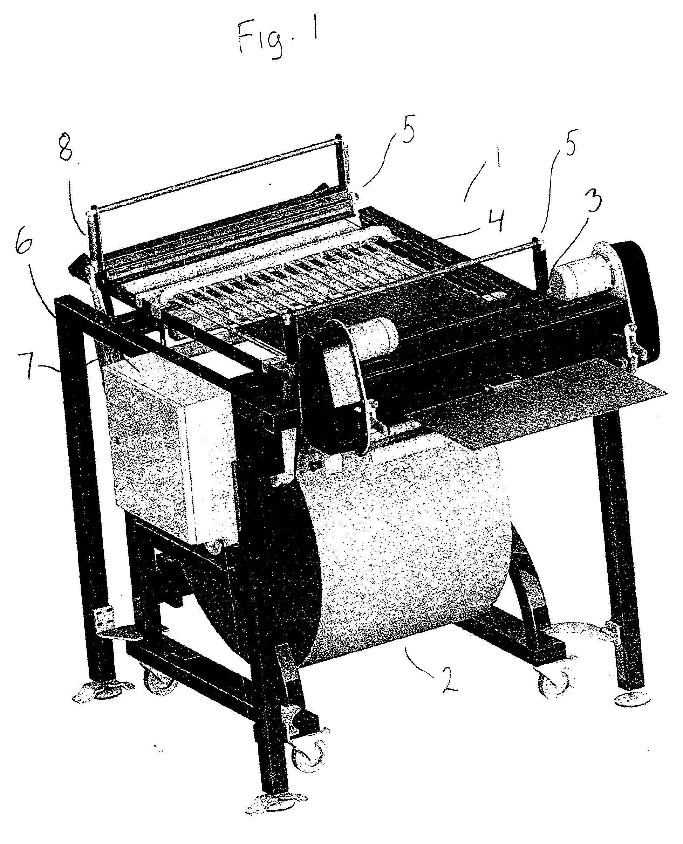

Figure 1 shows a sheet dispenser 1 according to the invention. The sheet dispenser 1 comprises a roll 2 with sheet material and a feeding device 3 for feeding sheet material to the sheet feeder 4. The sheet feeding device 3 may also include the cutting device which serves to cut the sheet material from the roll 2 into pieces of sheet having a convenient size when they are feed to the sheet feeder 4. The sheet feeding device 3 may also include means to apply an antiskid coating to the sheet material.

The sheet dispenser with the parts and features described above, is as such a well-known type of sheet dispenser.

However, the sheet dispenser 1 also comprises a folding mechanism 5, which is mounted at opposing ends of the sheet feeder 4. In this particular embodiment, the folding mechanism 5 is adapted to provide two folded parts in the sheet on the sheet feeder. The sheet feeding device 3, the cutting device, the means for applying antiskid coating and the folding mechanism may all be controlled by a control device mounted in the box 6 on the sheet dispenser 1. Moreover, two different types of hydraulic actuators 7 and 8 are integrated in the folding mechanism 5 to operate the moving parts. The hydraulic actuators 7 and 8 serve to move a roller and a knife folder in a predetermined pattern, which will be described later.

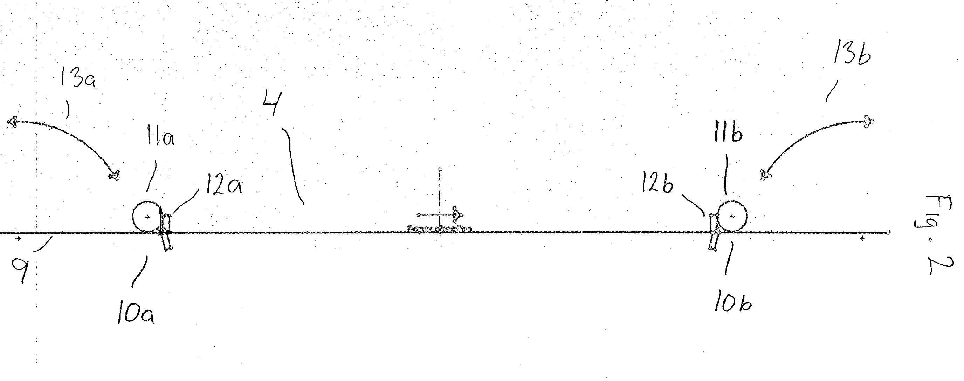

The function of the folding mechanism is illustrated schematically in the figures 2, 3 and 4.

Figure 2 shows the situation where a sheet 9 is feed to the sheet feeder 4. The sheet 9 engages a first folding device 10a and a second folding device 10b. The folding devices 10a and 10b are both part of the folding mechanism 5. Each folding device 10a and 10b comprises a roller 11a, 11b and a folding knife 12a, 12b. The knife is not sharp enough to cut through the paper or cardboard and simply strikes and creases the paper or cardboard along the line where the fold is required.

The arrows 13a and 13b indicate the direction of movement of the folding devices 10a and 10b during the folding operation. The movement is due to displacement of the hydraulic actuators 7 and 8, which are seen in figure 1.

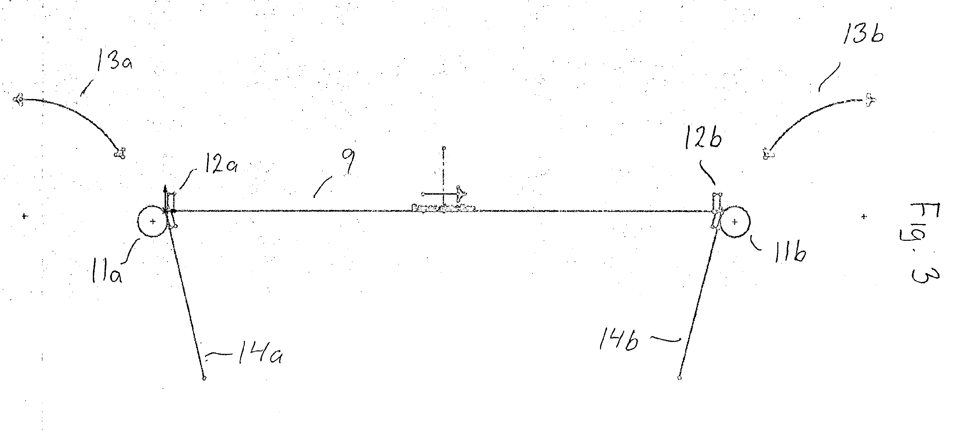

Figure 3 shows the situation during the folding of the sheet 9. The rollers 11a and 11b are moved downwards, and the sheet 9 is folded over the folding knifes 12a and 12b, whereby two folded parts 14a and 14b are formed in the sheet 9.

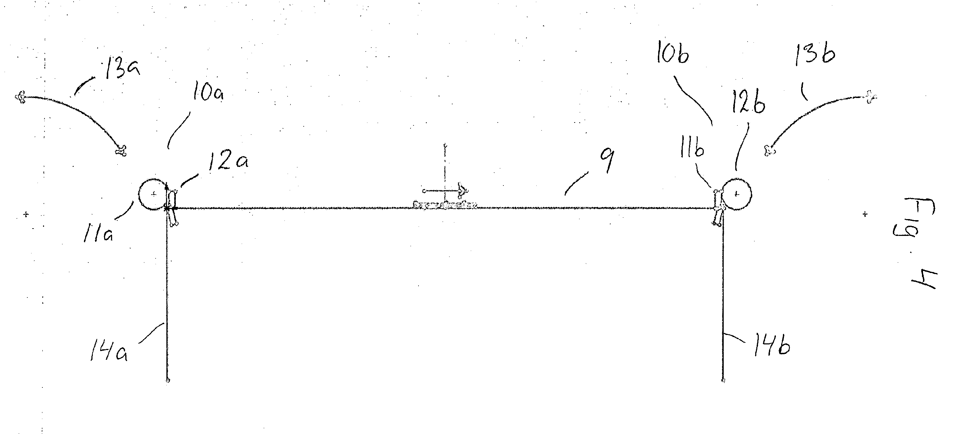

Figure 4 shows the finally folded sheet 9 with the folded parts 14a and 14b ready to be used as an intermediate layer on a stacked pallet. The folding devices 10a and 10b are brought back to the start position. When the folded sheet is removed from the sheet feeder, either by a robot with e.g. suction means or manually, the procedure of folding may be repeated with a new piece of sheet material.

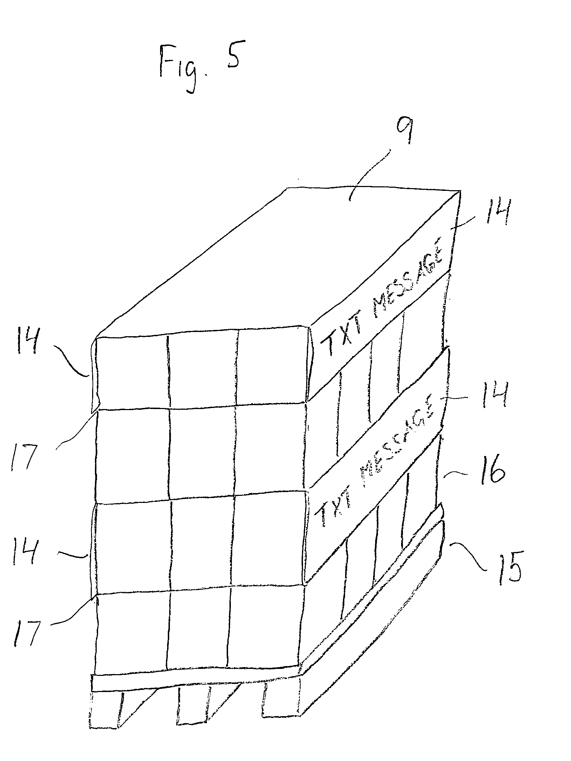

Figure 5 shows a pallet 15 stacked with packages 16. Between each second layer of stacked packages 16 there is placed a sheet 9 as an intermediate layer. The sheet 9 has folded parts 14 provided with a text message. Between the remaining layers there is used a traditional intermediate sheet 17 without folded parts. In this embodiment, the folded parts 14 are visible on two sides of the stacked pallet 15.

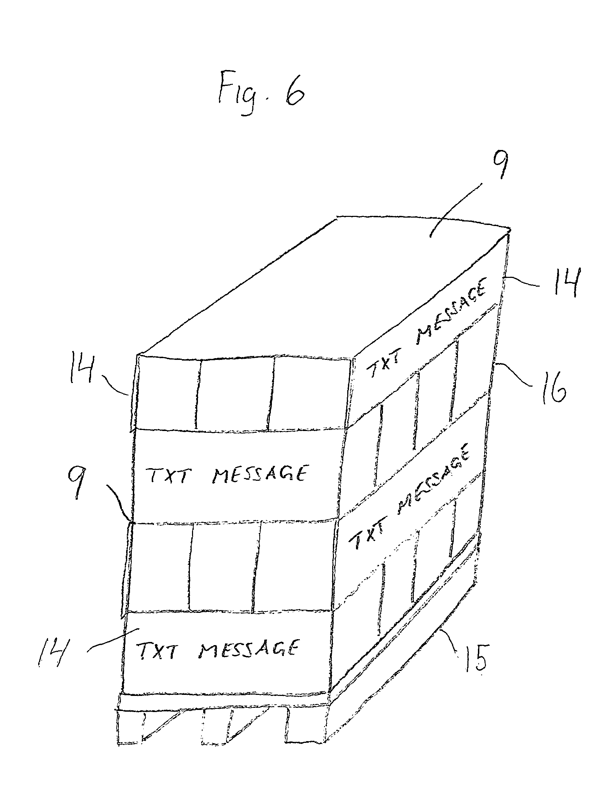

Figure 6 shows yet an embodiment of a stacked pallet 15. In this embodiment, only sheets 9 according to the invention are used as intermediate layers between the layers of stacked packages 16. However, the folded parts 14 are offset in respect of each subsequent intermediate layer. In this embodiment, the folded parts 14 are visible on four sides of the stacked pallet 15.

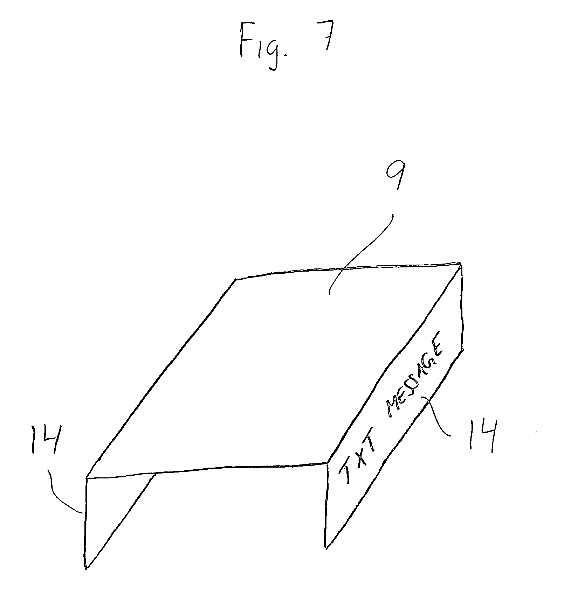

Figure 7 shows a folded sheet 9 according to the invention with folded parts 14 with text messages. The sheet 9 comprises an antiskid coating, which will ensure that a stacked pallet remains stable when the sheet 9 is used as an intermediate sheet layer between the layers of stacked packages.

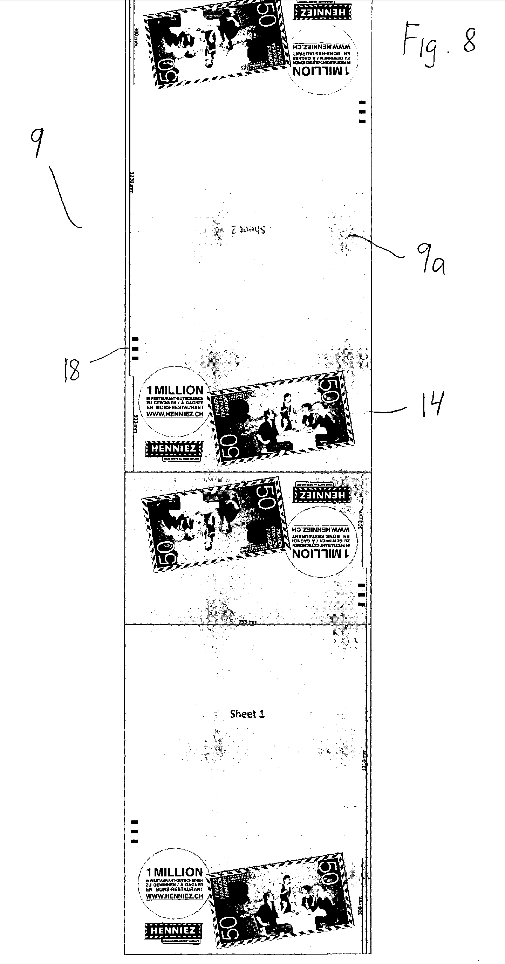

Figure 8 shows an example of a sheet material which may be used in a sheet dispenser according to the invention and cut into intermediate sheet layers. The sheet 9 is divided into sections 9a and 14. The sections 9a are intended for use as intermediate sheet layers between layers of stacked packages. The sections 14 are intended to form folded parts, in this embodiment with printed advertisements which should be visible on the stacked package. The sheet 9 comprises marks 18 which may be detected by sensors in a sheet dispenser according to the invention, thereby determining the locations where the sheet 9 should be cut and folded.

Figure 9 shows a sheet dispenser 1 according to the invention using the sheet 9 as shown in figure 8. The section 14 serves as a folded part and displays the text.

In this particular embodiment of the sheet dispenser 1, the roll 2 is mounted on a shaft 20 with attachment means 21 to a frame 22. The frame 22 is placed in the sheet dispenser which is immobilized by locking means 23.

The sheet dispenser 1 comprises a housing 24 in which the rollers and the knife or cutting means are mounted. Moreover, the sheet dispenser comprises boxes which include driving means for the rollers and the cutting means. An emergency stop 25 is provided on the housing 24.

The sheet feeder 3 is equipped with a folding tool comprising the folding mechanisms 5 at each end of the sheet feeder 3. The folding mechanisms 5 each include a folding device 10 with roller and folding knife. The folding device extends over the sheet feeder 3 in a direction substantially perpendicular to the feeding direction whereby the folding device also extends over the sheet 9 on the sheet feeder and is capable to fold the sheet to provide the folded part 14. At each end of the folding device plates 27 are mounted rotatably on the frame of the sheet dispenser 1. The plates 27 each comprise a slit, preferably a curved slit in which the folding device 10 may slide. A rotation of the plates 27 and the sliding motion of the folding device may be controlled by the actuators 7 and 8 attached to each plate 27.

When the plates 27 are moved the folding device will slide in the slit in a predetermined pattern, thereby performing a folding motion which will result in the folded part 14 of the sheet 9 on the sheet feeder 3.

The sheet dispenser 1 also comprises a box 6 housing a control device for controlling the operations of the sheet dispenser, such as the feeding, cutting and folding of the sheet by means of the folding tool. The control device may include a micro processor and a display on which an operator may adjust the functions of the sheet dispenser.

The present invention presents a simple and reliable solution by which a text message, advertisement, logo or similar may be presented visibly on a stacked package. It is clear that the invention may comprise several other embodiments than the specific embodiments described above. The folding tool or folding device may also be constructed in various ways.

## Claims

1. A sheet dispenser (1) for dispensing intermediate sheet layers (9) for use between layers of stackable packages on a pallet (15), said sheet dispenser (1) comprising a sheet feeder (4) and a cutting device to cut the sheet (9) in desired lengths in the direction of feeding, wherein the sheet dispenser (1) comprises a folding mechanism (5) adapted to provide at least one folded part (14a, 14b) in the sheet on the sheet feeder (4).

2. A sheet dispenser (1) according to claim 1, wherein the folding mechanism (5) is adapted to provide two folded parts (14a, 14b) in the sheet (9) on the sheet feeder (4).

3. A sheet dispenser (1) according to claim 1, wherein the folding mechanism (5) is adapted to provide at least one, preferably two folds in the sheet (9) on the sheet feeder (4), substantially perpendicularly to the direction of feeding

4. A sheet dispenser (1) according to claim 1, wherein the folded part (14a, 14b) or parts have an extension allowing the folded part (14a, 14b) or parts to extend beyond the pallet face size, when the sheet (9) is placed as an intermediate layer on a stack of packages on a pallet (15).

5. A sheet dispenser (1) according to claim 1, wherein the cutting device may be adjusted to cut off the sheet (9) in a desired length.

6. A sheet dispenser (1) according to claim 1, wherein the folding mechanism (5) is adapted to provide two folded parts (14a, 14b) on the sheet (9).

7. A sheet dispenser (1) according to claim 1, wherein the folding mechanism (5) comprises electric or hydraulic actuators

8. A sheet dispenser (1) according to claim 1, wherein the folding mechanism (5) functions as a knife folder.

9. A sheet dispenser (1) according to claim 1, wherein the sheet dispenser (1) comprises a printer adapted to print on the folded part (14a, 14b) or parts (14a, 14b) of the sheet (9).

10. A sheet dispenser (1) according to claim 1, wherein the folded part (14a, 14b) or parts (14a, 14b) has/have applied thereto a printed text or logo.

11. A method of providing a sheet (9) with a sheet part for a text message, logo or the like on a stacked pallet (15), said method comprising the steps of:
folding at least one part of the sheet (9) to obtain a folded part (14a, 14b);
moving the folded sheet to a pallet (15) with stacked packages; and
placing the sheet (9) in such a way that the unfolded part of the sheet (9) will become an intermediate sheet layer (9) between layers of packages on the pallet (15), and the at least one folded part (14a, 14b) will extend so as to be visible on one side of the stacked pallet (15),
wherein the folded part (14a, 14b) comprises a text message, logo or the like.

12. A method according to claim 11, wherein the sheet (9) is folded to obtain two folded parts (14a, 14b).

13. A method according to claim 11, wherein two folded parts (14a, 14b) at opposite ends of the sheet (9) are visible on two opposing sides of the stacked pallet (15).

14. A method according to any one of the claims 11 to 13, wherein the sheet (9) comprises an antiskid coating.

## Patentansprüche

1. Blattspender (1) zur Abgabe von mittleren Blattschichten (9) zum Gebrauch zwischen Schichten von stapelbaren Paketen auf einer Palette (15), wobei der Blattspender (1) eine Blattfördervorrichtung (4) und eine Schneidevorrichtung zum Schneiden des Blatts (9) in gewünschten Längen in der Förderrichtung umfasst, wobei der Blattspender (1) einen Faltmechanismus (5) umfasst, der dazu eingerichtet ist, wenigstens einen gefalteten Teil (14a, 14b) in dem Blatt auf der Blattfördervorrichtung (4) bereitzustellen.

2. Blattspender (1) nach Anspruch 1, wobei der Faltmechanismus (5) dazu eingerichtet ist, zwei gefaltete Teile (14a, 14b) in dem Blatt (9) auf der Blattfördervorrichtung (4) bereitzustellen.

3. Blattspender (1) nach Anspruch 1, wobei der Faltmechanismus (5) dazu eingerichtet ist, wenigstens eine, bevorzugt zwei Falten in dem Blatt (9) auf der Blattfördervorrichtung (4) bereitzustellen, im Wesentlichen senkrecht zu der Förderrichtung.

4. Blattspender (1) nach Anspruch 1, wobei der gefaltete Teil (14a, 14b) oder Teile eine Verlängerung aufweisen, die es dem gefalteten Teil (14a, 14b) oder Teilen erlaubt, sich über das Maß der Palettengröße hinaus zu erstrecken, wenn das Blatt (9) als eine mittlere Schicht auf einem Stapel von Paketen auf einer Palette (15) angeordnet ist.

5. Blattspender (1) nach Anspruch 1, wobei die Schneidevorrichtung angepasst sein kann, das Blatt (9) in einer gewünschten Länge abzuschneiden.

6. Blattspender (1) nach Anspruch 1, wobei der Faltmechanismus (5) dazu eingerichtet ist, zwei gefaltete Teile (14a, 14b) auf dem Blatt (9) bereitzustellen.

7. Blattspender (1) nach Anspruch 1, wobei der Faltmechanismus (5) elektrische oder hydraulische Stellglieder umfasst.

8. Blattspender (1) nach Anspruch 1, wobei der Faltmechanismus (5) als ein Falzmesser funktioniert.

9. Blattspender (1) nach Anspruch 1, wobei der Blattspender (1) einen Drucker umfasst, der dazu eingerichtet ist, auf dem gefalteten Teil (14a, 14b) oder Teilen (14a, 14b) des Blatts (9) zu drucken.

10. Blattspender (1) nach Anspruch 1, wobei auf dem gefalteten Teil (14a, 14b) oder Teilen (14a, 14b) ein gedruckter Text oder ein Logo aufgebracht ist.

11. Verfahren zum Bereitstellen eines Blatts (9) mit einem Blattteil für eine Textnachricht, ein Logo oder dergleichen auf einer gestapelten Palette (15), wobei das Verfahren die folgenden Schritte umfasst:
Falten mindestens eines Teils des Blatts (9), um einen gefalteten Teil (14a, 14b) zu erzielen;
Bewegen des gefalteten Blatts zu einer Palette (15) mit gestapelten Paketen; und
Anbringen des Blatts (9) in einer solchen Weise, dass der ungefaltete Teil des Blatts (9) eine mittlere Blattschicht (9) zwischen Schichten von Paketen auf der Palette (15) werden wird, und der mindestens eine gefaltete Teil (14a, 14b) sich so erstrecken wird, dass er auf einer Seite der gestapelten Palette (15) sichtbar ist,
wobei der gefaltete Teil (14a, 14b) eine Textnachricht, ein Logo oder dergleichen umfasst.

12. Verfahren nach Anspruch 11, wobei das Blatt (9) gefaltet ist, um zwei gefaltete Teile (14a, 14b) zu erzielen.

13. Verfahren nach Anspruch 11, wobei zwei gefaltete Teile (14a, 14b) an gegenüberliegenden Enden des Blatts (9) auf zwei gegenüberliegenden Seiten der gestapelten Palette (15) sichtbar sind.

14. Verfahren nach einem der Ansprüche 11-13, wobei das Blatt (9) einen Antirutschbelag umfasst.

## Revendications

1. Distributeur de feuilles (1) pour distribuer des couches de feuilles intermédiaires (9) pour utilisation entre des couches d'emballages superposables sur une palette (15), ledit distributeur de feuilles (1) comprenant un alimentateur de feuilles (4) et un dispositif de coupe pour couper la feuille (9) en des longueurs désirées dans la direction d'alimentation, où le distributeur de feuilles (1) comprend un mécanisme de pliage (5) adapté pour fournir au moins une partie pliée (14a, 14b) dans la feuille sur l'alimentateur de feuilles (4).

2. Distributeur de feuilles (1) selon la revendication 1, dans lequel le mécanisme de pliage (5) est adapté pour fournir deux parties pliées (14a, 14b) dans la feuille (9) sur l'alimentateur de feuilles (4).

3. Distributeur de feuilles (1) selon la revendication 1, dans lequel le mécanisme de pliage (5) est adapté pour fournir au moins un pliage, de préférence deux pliages dans la feuille (9) sur l'alimentateur de feuilles (4), substantiellement perpendiculaire à la direction d'alimentation.

4. Distributeur de feuilles (1) selon la revendication 1, dans lequel la partie pliée (14a, 14b) ou des parties ayant une extension permettant à la partie pliée (14a, 14b) ou des parties pliées à s'étendre au-delà de la dimension de la face de la palette, lorsque la feuille (9) est placée comme une couche intermédiaire sur un empilement d'emballage sur une palette (15).

5. Distributeur de feuilles (1) selon la revendication 1, dans lequel le dispositif de coupe peut être ajusté pour couper la feuille (9) en une longueur désirée.

6. Distributeur de feuilles (1) selon la revendication 1, dans lequel le mécanisme de pliage (5) est adapté pour fournir deux parties pliées (14a, 14b) sur la feuille (9).

7. Distributeur de feuilles (1) selon la revendication 1, dans lequel le mécanisme de pliage (5) comprend des actionneurs électriques ou hydrauliques.

8. Distributeur de feuilles (1) selon la revendication 1, dans lequel le mécanisme de pliage (5) fonctionne comme une plieuse à couteau.

9. Distributeur de feuilles (1) selon la revendication 1, dans lequel le distributeur de feuilles comprend une imprimante adaptée pour imprimer sur la partie pliée (14a, 14b) ou des parties (14a, 14b) de la feuille (9).

10. Distributeur de feuilles (1) selon la revendication 1, dans lequel la partie pliée (14a, 14b) ou les parties pliées (14a, 14b) a/ont un texte ou un logo appliqué là-dessus.

11. Procédé pour fournir une feuille (9) avec une partie de feuille pour un message texte, un logo ou similaire sur une palette empilée (15), ledit procédé comprenant les étapes de:
plier au moins une partie de la feuille (9) pour obtenir une partie pliée (14a, 14b);
déplacer la feuille pliée sur une palette (15) avec des paquets empilés ; et
placer la feuille (9) d'une telle manière que la partie non-pliée de la feuille (9) va devenir une couche de feuille intermédiaire (9) entre des couches de paquets sur la palette (15), et que la ou les partie(s) pliée(s) (14a, 14b) va/vont s'étendre de manière à devenir visible sur un côté de la palette empilée (15),
où la partie pliée (14a, 14b) comprend un message texte, un logo ou similaire.

12. Procédé selon la revendication 11, dans lequel la feuille (9) est pliée de manière à obtenir deux parties pliées (14a, 14b).

13. Procédé selon la revendication 11, dans lequel deux parties pliées (14a, 14b), à des extrémités opposées de la feuille (9), sont visibles sur deux côtés opposés de la palette empilé (15).

14. Procédé selon l'une quelconque des revendications 11 ou 13, dans lequel la feuille (9) comprend un enduit antidérapant.
